# EUROPEAN PATENT APPLICATION

(11) **EP 2 848 122 A1**
(43) Date of publication of application: **18.03.2015**
(21) Application number: 12864093.5
(22) Date of filing: 28.12.2012
(51) Int. Cl.: A01N 25/10

(54) **NEW PESTICIDE INCLUSION COMPLEXES, COMPOSITIONS CONTAINING SAID COMPLEXES AND THE USE THEREOF AS PESTICIDES**

(30) Priority: 05.01.2012 ES 201230020
(71) Applicant: Universidad Del País Vasco/Euskal Herriko Unibertsitatea (UPV/EHU), 48940 Leioa (Vizcaya) (ES)
(72) Inventor: ALONSO ALONSO, María Luz, E-48940 Leioa (Vizcaya) (ES); LAZA TERROBA, José Manuel, E-48940 Leioa (Vizcaya) (ES); ALONSO ROJAS, Rosa María, E-48940 Leioa (Vizcaya) (ES); JIMÉNEZ SANZ, Rosa María, E-48940 Leioa (Vizcaya) (ES); VILAS VILELA, José Luis, E-48940 Leioa (Vizcaya) (ES)
(74) Representative: Stiebe, Lars Magnus
(86) International application number: PCT/ES2012/070922
(87) International publication number: WO 2013/102691

(57) **Abstract**

The invention relates to new pesticide inclusion complexes, in particular pyrethroids, neonicotinoids, carbamates, organophosphorylated compounds, phenylpyrazoles, triazoles, benzoylureas, oxadiazines, nitromethylenes, synergists, etc., which are obtained by means of encapsulation with natural or modified cyclodextrins, preferentially alpha-cyclodextrins, beta-cyclodextrins, gamma-cyclodextrins, hydroxypropylcyclodextrins, methyl cyclodextrins and sulphated cyclodextrins. Said pesticide inclusion complexes make it possible to obtain pesticides compositions of reduced toxicity and environmental impact and also compositions that are safe to handle and to store and are designed to eliminate, reduce, control, attract, repel, counteract, neutralize, prevent the action of or exert control over another type of harmful organism selected from amongst gastropods, nematodes, arthropods, or an organism that is harmful to, for example, humans, animals, crops, harvests or articles.

## Description

### FIELD OF THE INVENTION

The present invention relates to new pesticide inclusion complexes and the use thereof to obtain pesticides compositions and as pesticides. More specifically, the invention relates to new pesticide inclusion complexes, in particular pyrethroids, neonicotinoids, carbamates, organophosphorylated compounds, phenylpyrazoles, triazoles, benzoylureas, oxadiazines, nitromethylenes, synergists, etc., which are obtained by means of encapsulation with natural or modified cyclodextrins. These new pesticide inclusion complexes make it possible to obtain pesticides compositions of reduced toxicity and environmental impact, and also compositions that are safe to handle and to store.

### BACKGROUND OF THE INVENTION

Generally, there are a number of limitations to the use of pesticidal products such as the toxicological profile that is inherent to their nature, which limits their use in different areas, as well as some solubility properties which prevent or limit the use of water as a vehicle, a physical state which hinders the handling of the pesticide by an operator, some chemical features causing easy detection thereof and repellence, and some storage conditions that require protection from light and heat.

The conventional ways in which pesticides are found on the current market, such as powders, emulsions, baits and sprays, and their application in these forms directly on the required area, lead to serious environmental problems, contaminating water, land an air ecosystems, and consequently affecting the human and animal population, both by direct contact and by involuntary exposure in treated areas and/or by intake of contaminated plant matter, meat or water.

One way of reducing the potential risk of pesticides is the use of inclusion complexes. The term inclusion complexes was coined by Schienk in 1950 (Szejtli J. (1988), "Cyclodextrin Technology" vol 1, Springer, New York" 978-90-277-2314-7). Inclusion complexes have the structure of an adduct in which each of the compounds spatially incorporates and houses other molecules. These host molecules occupy the cavity without affecting the structure of the host molecules. In most cases the size and shape of the cavity is not modified by the formation of the inclusion complex, except in a slight deformation. The process of formation of inclusion complexes has been primarily applied to the pharmaceutical field (50 %), in manufacturing chemical products (16 %), in analytical applications (19 %), in cosmetics (7 %) and in the food sector (7 %). Agrochemical products and pesticides have been also complexed (1 %), by using various polymeric encapsulating agents (aromatic polyisocyanates, polyureas, etc.).

In the field of the pharmaceutical industry, the formation of inclusion complexes makes it possible to improve the features of the finished product, for example by increasing the stability of the labile compounds and facilitating the absorption and release of the active ingredients (U. Szejtli, L. Szente, E. Eanky-Elód, Acta Chim. Acad. Sci. Hung., 101, 27 (1979)).

Inclusion complexes with cyclodextrins have been used in the chemical industry to accelerate a number of reactions (A. Farnesier, E. Reniero, P. Serimin, U. Tanellato. J. Chem. Sao. Perkin Trans. II, 1121 (1987)).

As for analytical applications, it is worth highlighting their use in both spectroscopic and chromatographic techniques after recognizing that the complex results in an increase in the selectivity and sensitivity of the tested analyte (F. Cramer en ODuchéne Ed.: "Cyclodextrins and their industrial uses", Editions de Santé, Paris, 1987).

Similarly, for example WO1995/017815, "Biologically active agent encapsulated in biodegradable starch/polymer matrices", relates to a composition for the encapsulation of bioactive agents in a denatured-starch-based matrix which has a low rate of bioactive agent releasing. The document ES 2,169,391 T3, "Composiciones Microencapsuladas", describes a method for the preparation of microcapsules containing an agriculturally active material, characterized in that it comprises the steps of (a) preparing an organic phase comprising a water-immiscible material which must be encapsulated, an aromatic diisocyanate and optionally an aromatic polyisocyanate which has 3 or more isocyanate groups, wherein, when the organic phase comprises an aromatic diisocyanate and an aromatic polyisocyanate, the weight ratio of polyisocyanate to diisocyanate is 1:100 to 1:1.5; (b) introducing the organic phase into an aqueous phase comprising water, a protective colloid and optionally a surfactant, to form a dispersion of the organic phase in the aqueous phase; (c) mixing the dispersion, under high shear stress, to form an oil-in-water emulsion wherein the oil drops have an average size of 1 to 5 micrometres; (d) adjusting, as may be needed, the temperature and/or pH of the oil-in-water emulsion to bring about a polymerization reaction to form microcapsules of polyurea containing the organic phase. ES 2,171,955, "Complejos de inclusion de halopropargilo", relates to a biocidal composition comprising a halopropargyl inclusion complex and a cyclodextrin for use thereof in aqueous compositions intended for paints, stucco, concrete, textiles and the like, and which protects from photochemical deterioration.

The present invention addresses the problem of providing new forms for applying pesticides which at least partially overcome the aforementioned problems.

The solution proposed by the present invention is based on the development of new pesticide inclusion complexes (pyrethroids, carbamates, organophosphorylated compounds, neonicotinoids, phenylpyrazoles, triazoles, benzoylureas, oxadiazines, nitromethylenes, synergists, etc.) with both natural and synthetic cyclodextrins. The formation of inclusion complexes increases the effectiveness of the pesticide by reducing its repellent properties, especially in food baits. The complexes formed exhibit physicochemical properties that are different and adjustable with respect to the raw pesticidal materials, such that it is possible to modify their solubility in water, melting point, storage stability, as well as reduce the toxicity of the active substances.

### DESCRIPTION OF THE DRAWINGS

- Figure 1:: Diagram of a solubility study using ultraviolet (UV) spectrophotometry of Bendiocarb as the concentration of cyclodextrin increases.
- Figure 2:: Graph of differential scanning thermogravimetry (DST) of Bifenthrin alone, cyclodextrin (CD) alone, physical mixture of the two, and inclusion complex formed (encapsulated).
- Figure 3:: Curves of differential thermal analysis (DTA) and thermal gravimetric analysis (TGA) of Tetramethrin alone, cyclodextrin (CD) alone, physical mixture of the two, and different inclusion complexes formed according to methods 1 or 2 and with the indicated stechiometries 1:1 or 2:1.
- Figure 4:: Spectra of Nuclear Magnetic Resonance (1 H NMR) of Acetamiprid alone (a), cyclodextrin (CD) alone (b) and formed inclusion complex (c).
- Figure 5:: Scanning electron photographs (SEM) of the structural change of Tebuconazole once the inclusion complex with cyclodextrin is formed.
- Figure 6:: X-ray diffractograms (XRD) of Imidacloprid alone, cyclodextrin (CD) alone, physical mixture of both and inclusion complex formed (encapsulation).
- Figure 7:: Diagram of the three-dimensional structures of the Acetamiprid-cyclodextrin complex by formation of a single crystal.
- Figure 8:: Structural modelling by means of the program MACROMODEL of the Acetamiprid-cyclodextrin dimer.
- Figure 9:: Performance of the Bendiocarb microencapsulation reaction (DSC).

### DESCRIPTION OF THE INVENTION

According to a first aspect the invention relates to a new inclusion complex of a pesticide with a cyclodextrin, hereinafter the inclusion complex of the invention. In a particular embodiment cyclodextrin may be natural or synthetic. More particularly the natural cyclodextrin is selected from the group constituted by alpha-cyclodextrins, beta-cyclodextrins, gamma-cyclodextrins and mixtures thereof, and the synthetic cyclodextrin is selected from the group formed by hydroxypropylcyclodextrins, methyl cyclodextrins, sulphated cyclodextrins, and mixtures thereof.

In the context of the present invention, a pesticide is understood to be a substance capable of eliminating, reducing, controlling, attracting, repelling, counteracting, neutralizing, preventing the action or exercising other kinds of control over a harmful organism selected from the group consisting of gastropods (snails, slugs...), nematodes, arthropods (arachnids -mites, spiders-insects -cockroaches, fleas, aphids- millipedes- mealybugs-), parasites, rodents, molluscs, birds and fish.

In a particular embodiment the pesticide is selected from the group formed by pesticides from the group consisting of pyrethroids, neonicotinoids, carbamates, organophosphorylated compounds, phenylpyrazoles, triazoles, benzoylureas, oxadiazines, nitromethylenes and combinations thereof. In another particular embodiment the pesticide is selected from the group consisting of chlorpyrifos, acetamiprid, bifenthrin, bendiocarb, tebuconazole, tetramethrin, cypermethrin, alpha-cypermethrin, deltamethrin, fipronil, azamethiphos, propoxur, thiacloprid, imidacloprid, piperonyl butoxide, indoxacarb, fenitrotion, etofenprox, cyfluthrin, esbiothrin, esfenvalerate, lambda-cyhalothrin, permethrin, prallethrin, diflubenzuron, hexaflumuron, flufenoxuron, triflumuron, bistrifluron, nitenpyram and combinations thereof.

The inclusion complex of the invention is characterized in that it exhibits a ratio of active pesticide ingredient:cyclodextrin in the inclusion complex of between 1:1 and 1:2.

For obtaining the referred inclusion complexes the preparation method comprises preparing an aqueous solution of the cyclodextrin to be used, preferably alpha-cyclodextrin, beta-cyclodextrin, gamma-cyclodextrin, methyl cyclodextrin or hydroxypropylcyclodextrin, at a concentration of between 0.1 % and 30 %, at room temperature and with agitation. On this solution, the pesticide is added either directly, Method 1 in the present specification, or dissolved, Method 2 in the present specification, in the suitable medium according to its physicochemical characteristics (solvent, pH, solubility) in a suitable stoichiometrical ratio, preferably from 1:1 to 1:2 (Pesticide:Cyclodextrin), at room temperature and with continuous agitation, until equilibrium in complex formation is established. Subsequently, the complex is recovered.

The inclusion complexes obtained from the invention may be used in either solid state or dissolved. To obtain complexes in solid state one proceeds to filter and dry or lyophilize the same.

In one embodiment of the present invention, an inclusion complex is provided from bifenthrin with a cyclodextrin.

In another embodiment, an inclusion complex is provided from tebuconazole with a cyclodextrin.

Similarly, according to another embodiment of the invention, an inclusion complex is provided from bendiocarb with a cyclodextrin.

Furthermore, in still another embodiment, an inclusion complex is provided from an acetamiprid with a cyclodextrin.

In another embodiment of the invention, an inclusion complex is provided from alpha-cypermethrin with a cyclodextrin.

To corroborate the formation of the inclusion complexes, the obtained complexes are compared with the free raw active pesticide ingredients and cyclodextrin, and with a physical mixture obtained by simple homogenization of a pesticide mixture and cyclodextrin, in the same proportion as in the inclusion complex, in a mortar.

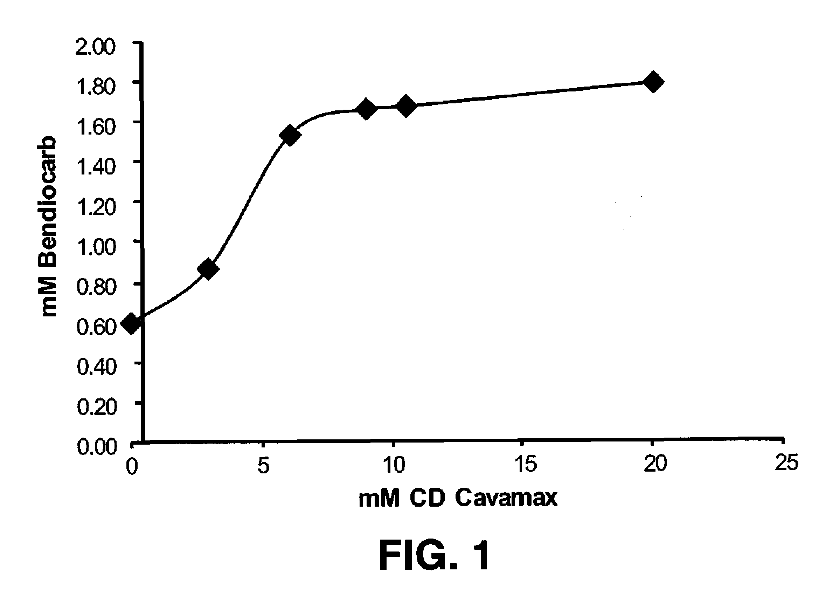

As may be observed in Figure 1, wherein the water solubility of Bendiocarb is shown by way of example, the intrinsic solubility of which is 0.60 mM at 25 °C, it is found that when the concentration of cyclodextrin (mM) in the medium is increased, solubility is increased due to the formation of the inclusion complex. Thus, the solubility of the encapsulated active pesticide ingredients is increased compared to unencapsulated active ingredients.

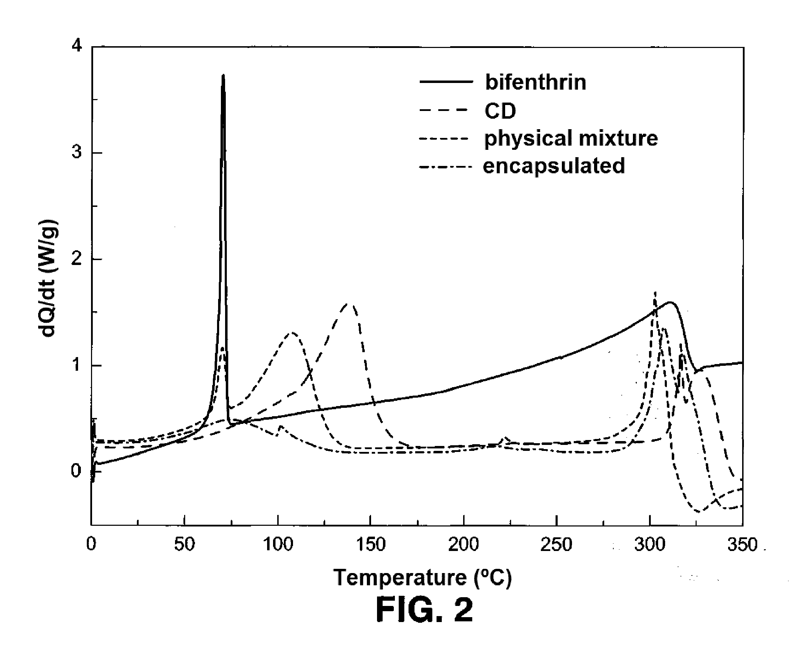

It may be observed, by means of DSC and DTA calorimetric measurements (see Figure 2), respectively, that the characteristic Acetamiprid melting peak appears only in the curve of pesticide itself and in the physical mixture, but does not appear should it be encapsulated, which demonstrates that a new Bifenthrin-cyclodextrin (CD) compound has been produced.

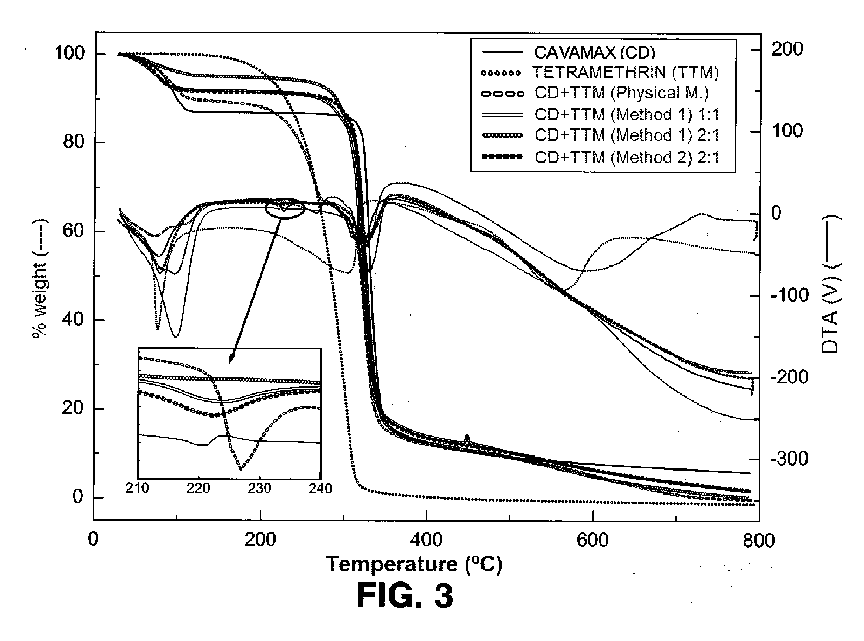

In Figure 3 the curves of differential thermal analysis (DTA), and thermogravimetry (TGA) are shown for: (i) cyclodextrin (CD), (ii) tetramethrin (TTM), (iii) physical mixture of CD and TMM and (iv) various inclusion complexes of CD and TMM obtained according to methods 1 or 2 and with 1:1 or 2:1 stoichiometries. The occurrence of a characteristic cyclodextrin peak may be observed in the curves of cyclodextrin alone and the physical mixture, but not in the inclusion complexes, indicating that there is no free cyclodextrin in the inclusion complex. Another technique which has been used to determine the amount of cyclodextrin in the complex is capillary zone electrophoresis (CZE). With these two techniques and with solubility studies the stoichiometry of the complex is determined.

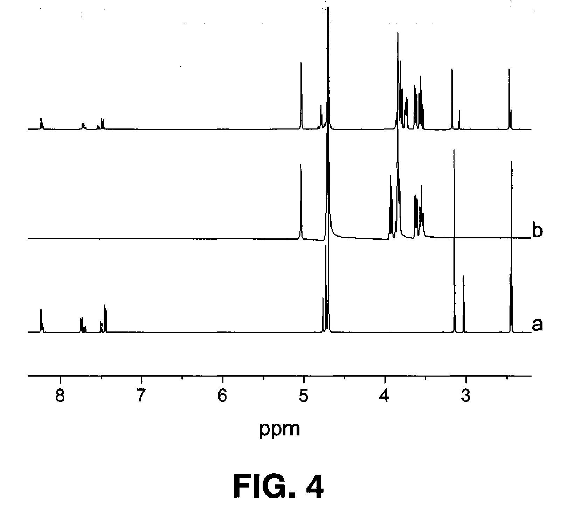

The verification of the formation of the inclusion complex is also carried out by 1 H NMR techniques (Figure 4), wherein chemical shifts may be observed in the signals of pure Acetamiprid and cyclodextrin with respect to the encapsulated complex. The following **Table 1** contains the chemical shifts of the protons of free acetamiprid and CD (first column) and those of the inclusion complex (second column).

**Table 1**

| **Acetamiprid** | δ**_{free}** | δ**ₑ** | Δδ |
|---|---|---|---|
| H6 | 7.739 | 7.719 | 0.020 |
| | 7.698 | 7.685 | 0.013 |
| H5 | 7.496 | 7.537 | 0.041 |
| | 7.449 | 7.486 | 0.037 |
| CH₃ | 2.441 | 2.475 | 0.034 |
| N-CH₃ | 3.142 | 3.175 | 0.033 |
| | 3.096 | 3.030 | 0.066 |

| β-CD | **δ_{free}** | **δₑ** | **Δδ** |
|---|---|---|---|
| H3 | 3.930 | 3.824 | 0.106 |
| H5 | 3.821 | 3.755 | 0.066 |

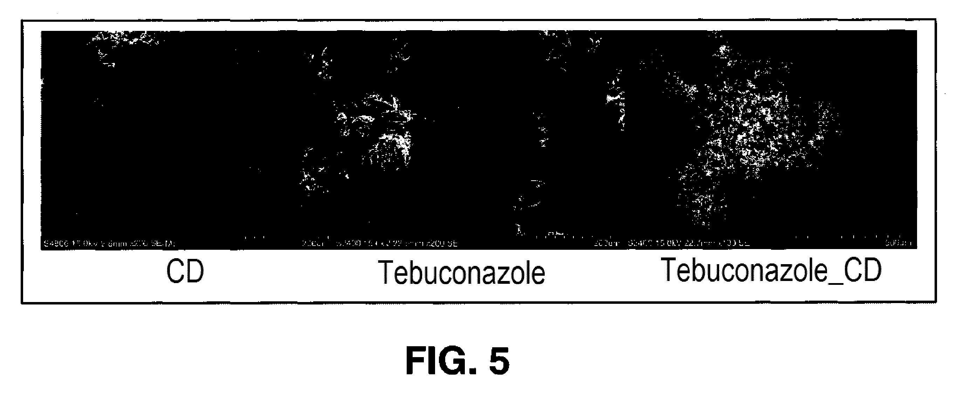

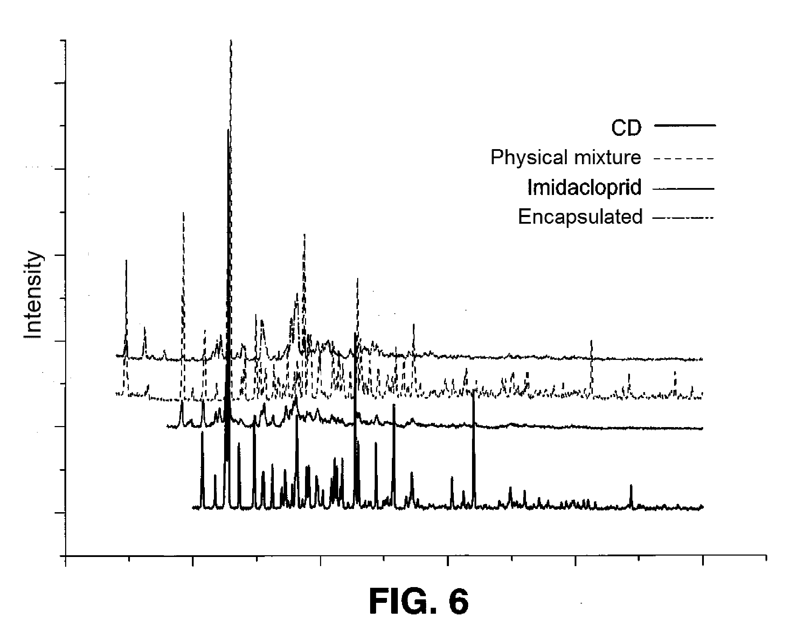

In addition, in order to demonstrate the formation of new bonds, basically two tools are used; in this regard, in Figure 5, structural differences may be observed between the scanning electron microscopy (SEM) photographs, in the case of Tebuconazole, of cyclodextrin and of the inclusion complex, which corroborates the formation of a compound that differs from the pure raw substances. In addition, it may be observed by X-ray diffraction of Imidacloprid (Figure 6), that the intensity peaks of the inclusion complex do not correspond to those belonging to the pure compounds, nor to those belonging the physical mixture, thus corroborating the formation of bonds that are new and, therefore, have a different structure.

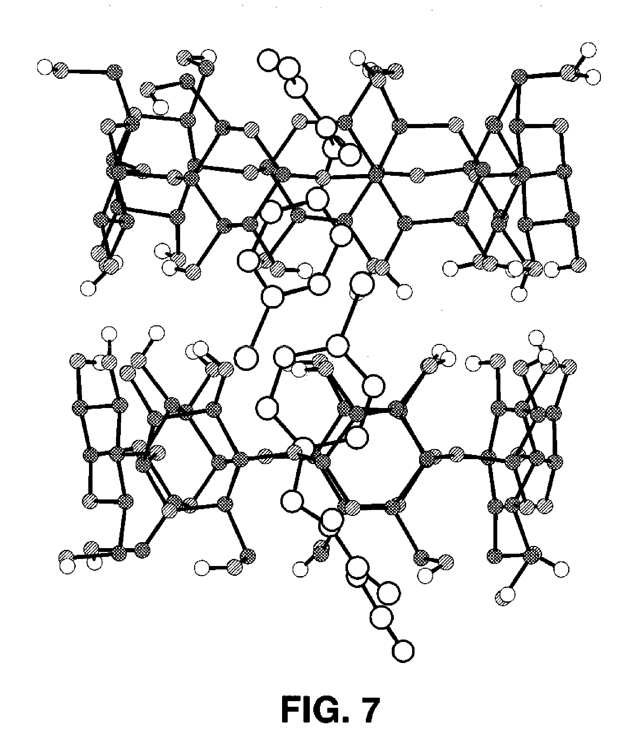

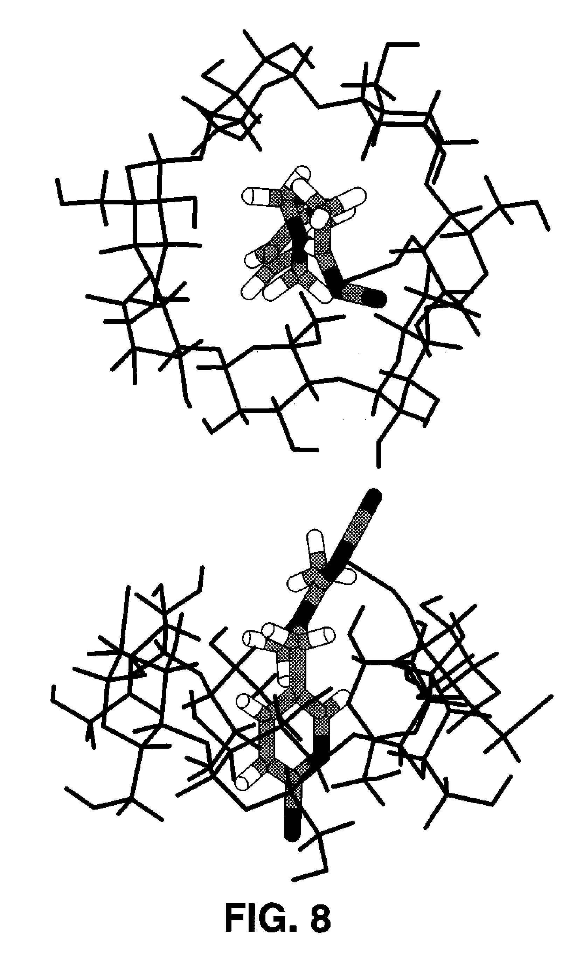

Also, the inventors have managed to form a single crystal and to observe it through DRX, thereby being able to study the structure of the formed Acetamiprid compound wherein cyclodextrin and Acetamiprid are bound, forming dimers. A diagram of the same is shown in Figure 7. By means of macromolecular modelling (Figure 8) it has been possible to corroborate everything that has been theoretically explained above.

In another aspect the invention is related to a pesticides composition comprising at least one inclusion complex of the invention together with at least one additive or suitable vehicle. The pesticides composition, hereinafter the composition of the invention, may be in solid or liquid form, for example in the form of a solution of a complex of the invention. The composition may comprise more than one of the inclusion complexes of the invention. In a particular embodiment the composition further comprises a pesticide that is the same as or different from that of the free inclusion complex.

In another aspect, the invention relates to the use of the inclusion complex of the invention or of the composition of the invention as a pesticide. In the context of the invention a harmful organism may be harmful to, for example, a human, as well as to animals, crops, harvests, or articles in general. The particular use in each case will depend on the pesticide itself of the inclusion complex, on the particular harmful organism to be treated, on the particular application site, etc. The inclusion complex of the invention presents many advantages, such as helping to reduce or eliminate the possibility of detection of the active pesticide ingredient by the pest (target pest or biological system), modulating the solubility of the pesticide in water by means of the appropriate choice of the cyclodextrin, thus obtaining aqueous pesticide products without organic solvents, thereby contributing to an environmental improvement. In addition, they make it possible to improve safety in handling the active pesticide ingredient, as well as broadening the field of application due to their stability and the low dosage of the active pesticide ingredient. The improvement in safety in the handling of, for example, pyrethroids, which in some cases may cause an adverse reaction in the skin, is particularly advantageous. Said reaction, which is known as paraesthesia, is associated with infinitesimal amounts of pyrethroid that are transferred to the most sensitive areas of the operator, such as the face, neck etc.

Another improvement relates to the most labile pesticides against light, hydrolysis or temperature, as well as some pyrethroids, having a certain degree of instability which limits the effectiveness of treatment and thus their use and application in fields such as agriculture. By means of the complex of the invention these active ingredients remain more protected, increasing the longevity of the molecule and thus its use. The problem of tolerance and resistance against pesticides is a serious problem that is gaining importance since it leads to greater difficulty to control and eliminate pests (infestations). The complexes of the invention allow that application dosages are low and specific, both by the harmful organism to be treated as for the application site which involves a great advantage.

Specifically, for example, Chlorpyrifos or Azamethiphos are solid organophosphorylated pesticides with poor water solubility, which are conventionally employed in the form of an oleaginous mixture or as-is in solid form. Equally, Acetamiprid is a broad-spectrum neonicotinoid-based insecticide; Bifenthrin, like Tethrametin or Cypermethrin, are pyrethroid-based insecticides and acaricides used in gardening, agriculture, urban settings and the home; Tebuconazole is a systemic tryazol with fungicidal preventive, curative and eradicant activity; Fipronil is a highly effective and broad-spectrum phenylpyrazol-based insecticide, with a potential value for controlling many crops, public hygiene and pests (infestations) in pet care and veterinary care settings, etc. The inclusion complexes according to the invention provides, with all them, the aforementioned advantages.

Additionally, the inclusion complex of the invention makes it possible to broaden their application scope, making their handling easier even by non-specialized persons, for example, for the control of cockroaches, fleas and termites. The complex of the invention or pesticides composition of the invention may be used in anti-parasite collars for pets, for controlling fleas and ticks. In a particular embodiment, the complex of the invention or the pesticides composition of the invention is used for controlling ticks in livestock; the composition of the invention may be in solid form, for example as granules, powders or solid baits. In another particular embodiment, the pesticides composition of the invention is found as a solution, for example in the form of a spraying mist for controlling a pest (infestation) in harvests, gardens, crops, etc.

The invention is illustrated below based on the following non-limiting examples thereof.

### EXAMPLES

### Example 1: Preparation of an inclusion complex of cyclodextrin and Bifenthrin

1.14 g (1 mmol) of cyclodextrin were dissolved in distilled water at room temperature and with agitation. To the obtained solution, 1 ml of a solution of Bifenthrin, previously purified by crystallization, in 0.21 g (0.5 mmol) of acetone, was added dropwise and under agitation.

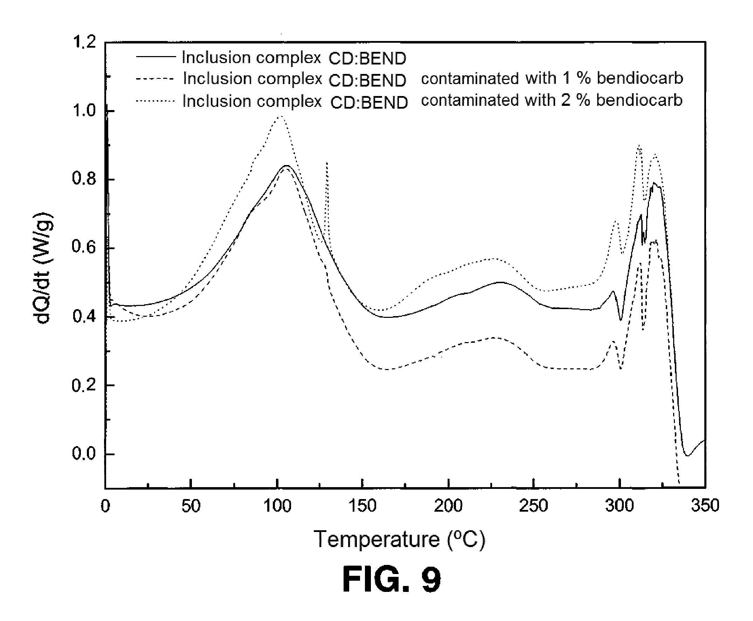

Having verified the formation of the inclusion complex by means of all the aforementioned methods (DSC, DTA/TGA, DRX, SEM, CZE and 1H NMR), quantification is established by DSC (Differential Scanning Calorimetry), with the aim of learning the yield of the microencapsulation procedures. To this end, the minimum percentage of biocide detectable by means of said technique was calculated in the following way: different amounts of the same pesticide were added to an inclusion complex, whose thermogram does not show the characteristic free biocide peak, and analysis was performed on the mixture by means of this technique. In view of the results provided by DSC for encapsulation, as may be observed in Figure 9, in the case of bendiocarb, the obtained yield may be guaranteed to be greater than 99 %.

The water solubility of the complex versus the free pesticide, measured by means of ultraviolet spectrophotometry, increased more than two fold (Kegley, S.E., Hill, B.R., Orme S., Choi A.H., PAN Pesticide Database, Pesticide Action Network, North America, San Francisco, CA, 2009).

### Example 2: Preparation of an inclusion complex of cyclodextrin and Tebuconazole

1.14 g (1 mmol) of cyclodextrin were dissolved in distilled water at room temperature and with agitation. To the obtained solution, 1 ml of a solution of tebuconazole, previously purified by crystallization, in 0.31 g (1 mmol) of acetone, was added dropwise and under agitation. The yield of the inclusion process was greater than 99 %. The water solubility of the complex versus the free pesticide, measured by means of ultraviolet spectrophotometry, increased more than two fold.

### Example 3: Preparation of an inclusion complex of cyclodextrin and Bendiocarb

1.14 g (1 mmol) of cyclodextrin were dissolved in distilled water at room temperature and with agitation. To the obtained solution, 1 ml of a solution of Bendiocarb, previously purified by crystallization, in 0.22 g (1 mmol) of acetone, was added dropwise and under agitation. The yield of the inclusion process was greater than 99 %. The water solubility of the complex versus the free pesticide, measured by means of ultraviolet spectrophotometry, increased more than two fold.

### Example 4: Preparation of an inclusion complex of cyclodextrin and Acetamiprid

1.14 g (1 mmol) of cyclodextrin were dissolved in distilled water at room temperature and with agitation. To the obtained solution, Acetamiprid, previously purified by crystallization, 0.22 g (1 mmol), was added. The yield of the inclusion process was greater than 99 %. The water solubility of the complex versus the free pesticide, measured by means of ultraviolet spectrophotometry, increased more than two fold.

### Example 5: Preparation of an inclusion complex of cyclodextrin and α-Cypermethrin

1.0103 g (2 mmol) of cyclodextrin were mixed with 0.196 (1 mmol) of α-Cypermethrin, previously purified by crystallization, with a minimal amount of distilled water, and the mixture was warmed to 80 °C, with agitation. The yield of the inclusion process was greater than 99 %. The water solubility of the complex versus free pesticide, measured by means of ultraviolet spectrophotometry, increased more than two fold.

### Example 6: Repellence elimination tests for insecticidal products

A sample was taken of 5 g of powdered sugar, to which the cyclodextrin-Bifenthrin inclusion complex (3.55x10⁻⁵ mol), equivalent to an active ingredient concentration of 0.3 % (weight/weight), was added. The sample was manually milled for 20 minutes to ensure homogeneity. Meanwhile, another 5 g of powdered sugar without any inclusion complexes were taken, and the sugar was suitably milled and homogenized.

For the tests, 20 adult *Blatella germanica* were used, which were placed in a sealed container together with the two sugar samples to be tested (one contaminated with the inclusion complex and the other not). The insects had unlimited access to the sugar samples and water.

The amount of sample that was made available to the insects was a disc with approximately 200 mg of sugar with inclusion complex and a second disc with 200 mg of non-contaminated sugar. The mortality was evaluated after 24 hours.

The test results are contained in **Table 2**. It may be observed that mortality after 24 h was 100 % for the two types of cockroaches studied, and only for the disc containing sugar contaminated with the inclusion complex.

### Example 7: Repellence elimination tests for insecticidal products

A sample was taken of 5 g of powdered sugar, to which the cyclodextrin-Bifenthrin inclusion complex (3.55x10⁻⁵ mol), equivalent to an active ingredient concentration of 0.3 % (weight/weight), was added. The sample was manually milled for 20 minutes to ensure homogeneity. Meanwhile, another 5 g of powdered sugar without any inclusion complexes were taken, and the sugar was suitably milled and homogenized.

For the tests, 20 adult *Blattella orientalis* were used, which were placed in a sealed container together with the two sugar samples to be tested (one contaminated with the inclusion complex and the other not). The insects had unlimited access to the sugar samples and water.

The amount of sample that was made available to the insects was a disc with approximately 200 mg of sugar with inclusion complex and a second disc with 200 mg of non-contaminated sugar. The mortality was evaluated after 24 hours.

The test results are contained in **Table 2**.

### Example 8: Repellence elimination tests for insecticidal products

A sample was taken of 5 g of powdered sugar, to which the cyclodextrin-Acetamiprid inclusion complex (6.71x10⁻⁵ mol), equivalent to an active ingredient concentration of 0.3 % (weight/weight), was added. The sample was manually milled for 20 minutes to ensure homogeneity. Meanwhile, another 5 g of powdered sugar without any inclusion complexes were taken, and the sugar was suitably milled and homogenized.

For the tests, 20 adult *Blatella germanica* were used, which were placed in a sealed container together with the two sugar samples to be tested (one contaminated with the inclusion complex and the other not). The insects had unlimited access to the sugar samples and water.

The amount of sample that was made available to the insects was a disc with approximately 200 mg of sugar with inclusion complex and a second disc with 200 mg of non-contaminated sugar. The mortality was evaluated after 24 hours.

The test results are contained in **Table 2**.

### Example 9: Repellence elimination tests for insecticidal products

A sample was taken of 5 g of powdered sugar, to which the cyclodextrin-Acetamiprid inclusion complex (6.71x10⁻⁵ mol), equivalent to an active ingredient concentration of 0.3 % (weight/weight), was added. The sample was manually milled for 20 minutes to ensure homogeneity. Meanwhile, another 5 g of powdered sugar without any inclusion complexes were taken, and the sugar was suitably milled and homogenized.

For the tests, 20 adult *Blattella orientalis* were used, which were placed in a sealed container together with the two sugar samples to be tested (one contaminated with the inclusion complex and the other not). The insects had unlimited access to the sugar samples and water.

The amount of sample that was made available to the insects was a disc with approximately 200 mg of sugar with inclusion complex and a second disc with 200 mg of non-contaminated sugar. The mortality was evaluated after 24 hours.

The test results are contained in **Table 2**.

**Table 2**

| **Insect under study** | **Mortality rate after 24 h for discs containing sugar contaminated with CD:Acetamiprid** |
|---|---|
| *elattella orientalis* | 100 % |
| *Blattella germanica* | 100 % |

| **Insect under study** | **Mortality rate after 24 h for discs containing sugar contaminated with CD:Bifenthrin** |
|---|---|
| *Blattella germanica* | 100 % |
| *Blattella orientalis* | 100 % |

## Claims

1. An inclusion complex formed by a pesticide and a cyclodextrin.

2. The inclusion complex according to claim 1, wherein the pesticide is selected from the group constituted by pyrethroids, neonicotinoids, carbamates, organophosphorylated compounds, phenylpyrazoles, triazoles, benzoylureas, oxadiazines, nitromethylenes and mixtures thereof.

3. The inclusion complex according to claim 2, wherein the pesticide is selected from the group constituted by chlorpyrifos, acetamiprid, bifenthrin, bendiocarb, tebuconazole, tetramethrin, cypermethrin, alpha-cypermethrin, deltamethrin, fipronil, azamethiphos, propoxur, thiacloprid, imidacloprid, piperonyl butoxide, indoxacarb, fenitrotion, etofenprox, cyfluthrin, esbiothrin, esfenvalerate, lambda-cyhalothrin, permethrin, prallethrin, diflubenzuron, hexaflumuron, flufenoxuron, triflumuron, bistrifluron, propoxur, nitenpyram and combinations thereof.

4. The inclusion complex according to any one of the claims 1 to 3, wherein the cyclodextrin is natural or synthetic.

5. The inclusion complex according to claim 4, wherein the natural cyclodextrin is selected from the group constituted by alpha-cyclodextrins, beta-cyclodextrins, gamma-cyclodextrins and mixtures thereof, and the synthetic cyclodextrin is selected from the group constituted by hydroxypropylciclodextrins, methyl cyclodextrins, sulphated cyclodextrins and mixtures thereof.

6. The inclusion complex according to any one of the claims 1 to 5, wherein the ratio of pesticide:cyclodextrin in the inclusion complex is comprised between 1:1 and 1:2.

7. The inclusion complex according to any one of the preceding claims, wherein the pesticide is bifenthrin.

8. The inclusion complex according to any one of the preceding claims, wherein the pesticide is tebuconazole.

9. The inclusion complex according to any one of the preceding claims, wherein the pesticide is bendiocarb.

10. The inclusion complex according to any one of the preceding claims, wherein the pesticide is acetamiprid.

11. The inclusion complex according to any one of the preceding claims, wherein the pesticide is alpha-cypermethrin.

12. A pesticides composition comprising an inclusion complex according to any one of the preceding claims together with at least one additive or vehicle.

13. The use of an inclusion complex or of the pesticides composition according to any one of the preceding claims to eliminate, reduce, control, attract, repel, counteract, neutralize, prevent the action of or exert control over another type of harmful organism selected from amongst gastropods, nematodes, arthropods, parasites, rodents, molluscs, birds and fish.
